# EUROPÄISCHE PATENTSCHRIFT

(11) **EP 0 893 200 B1**
(45) Veröffentlichungstag und Bekanntmachung des Hinweises auf die Patenterteilung: **02.10.2002**
(21) Anmeldenummer: 98112862.2
(22) Anmeldetag: 10.07.1998
(51) Int. Cl.: B23Q 11/08

(54) **Abstreifeinrichtung**
Wiper device
Dispositif racleur

(30) Priorität: 14.07.1997 DE 19730120
(43) Veröffentlichungstag der Anmeldung: 27.01.1999
(73) Patentinhaber: Gebr. Hennig GmbH, 85737 Ismaning (DE)
(72) Erfinder: Diels, Wolfgang, 80807 München (DE)
(74) Vertreter: Zinnecker, Armin, Dipl.-Ing.

(56) Entgegenhaltungen:
- EP-A- 0 502 328
- DE-A- 3 722 450
- DE-A- 4 343 741
- DE-B- 1 301 221

## Beschreibung

Die Erfindung betrifft eine Abstreifereinrichtung zum Anbau an wenigstens einen von zumindest zwei Maschinenteilen, von denen der eine relativ zum anderen bewegbar ist, insbesondere bei Werkzeugmaschinen zum Schutz von Führungsbahnen und zum Anbau an Teleskopabdeckungen solcher Führungsbahnen, entsprechend dem Oberbegriff des Anspruches 1.

Aus der Praxis sind bereits verschiedene Ausführungsarten von Abstreifereinrichtungen bekannt. Sie werden insbesondere bei Werkzeugmaschinen an Maschinenteilen angebaut, von denen zumindest der eine gegenüber dem anderen relativ bewegbar ist. Hierbei kann es sich beispielsweise um einen entlang einer Führungsbahn bewegbaren Support oder dergleichen handeln, wobei die Führungsbahn(en) mit Hilfe entsprechend angebrachter Abstreifereinrichtungen von Verschmutzungen (z.B. Spänen, Staub, Flüssigkeiten oder dergleichen) befreit bzw. freigehalten werden soll. Ähnlich verhält es sich auch bei der Anbringung von Abstreifereinrichtungen an sogenannten Teleskopabdeckungen mit wenigstens zwei teleskopartig ineinander- und auseinanderschiebbaren Abdeckkästen, durch die Führungsbahnen bei einer Werkstückbearbeitung gegenüber den oben genannten Verschmutzungen freigehalten werden. Bei diesen Abdeckkästen sorgen die an stirnseitigen Rändern der Abdeckkästen angebrachten Abstreifereinrichtung dafür, daß insbesondere beim Ineinanderschieben der Abdeckkästen deren Außenflächen ebenfalls von den genannten Verschmutzungen freigehalten werden und diese Verschmutzungen nicht in das Innere der Abdeckkästen, d.h. auf die zu schützenden Führungsbahnen gelangen können.

Da es sich bei den oben genannten Verschmutzungen sowohl um mechanisch als auch um chemisch aggressive Stoffe handeln kann, läßt es sich nicht vermeiden, daß die eigentlichen Abstreifelemente, nämlich die aus elastisch verformbarem Material hergestellten Abstreifleisten und dort insbesondere deren Abstreiflippen, mit der Zeit so stark beschädigt werden, daß eine einwandfreie Abstreif- und/oder Dichtwirkung nicht mehr gewährleistet werden kann. Diese Abstreifleisten müssen somit von Zeit zu Zeit gegen neue Abstreifleisten ausgetauscht werden. Aus diesem Grunde ist es bekannt, die profilierten Abstreifleisten - im Profilquerschnitt betrachtet - mit einem hinteren Halterungsansatz auszubilden, der in einer korrespondierend profilierten Halterungsausnehmung der starren Trägerleiste auswechselbar aufgenommen (und zwar gewissermaßen eingeschnappt) und gehaltert ist. Wenn dabei die Trägerleiste fest im entsprechenden Maschinenteil, z.B. einem Abdeckkasten einer Teleskopabdeckung, angebracht ist, dann muß dieser Maschinenteil ab- bzw. ausgebaut werden, um die Abstreifleiste auswechseln zu können. Dies ist jedoch sehr umständlich und zeitaufwendig, wobei die zugehörige Werzeugmaschine während der Auswechselarbeiten stillgesetzt werden muß.

Um diese Auswechselarbeiten von Abstreifleisten vereinfachen und schneller durchführen zu können, ist es auch bereits vorgeschlagen worden, die starre Trägerleiste und die darin gehalterte Abstreifleiste gewissermaßen als Einheit auszuwechseln, wozu die Trägerleiste beispielsweise mit Hilfe von Schrauben mit einem ersten Maschinenteil lösbar verbunden ist. Beispielsweise bei Teleskopabdeckkästen geschieht dies in der Form, daß über die Länge der Trägerleiste an dem der Abstreiflippe entgegengesetzten hinteren Rand eine Anzahl von Gewindebohrungen eingearbeitet ist, in die durch die entsprechenden Wandbereiche des zugehörigen Abdeckkastens hindurchgreifende Befestigungsschrauben eingeschraubt sind. Hierdurch kann zwar ein umständliches Auseinanderbauen der Maschinenteile, beispielsweise der einzelnen Abdeckkästen, im wesentlichen vermieden werden; für die Austauschmöglichkeiten einer mit einer Abstreifleiste versehenen Trägerleiste ist es jedoch erforderlich, zum einen für eine äußerst genaue Anbringung der entsprechenden Bohrungen (Durchgangsbohrungen am einen Maschinenteil und Gewindebohrungen an der Trägerleiste) zu sorgen und zum andern die neu anzubringende Trägerleiste exakt gegenüber dem sie aufnehmenden Maschinenteil - insbesondere in Querrichtung - auszurichten, bevor die Befestigungsschrauben genau in die zugehörigen Gewindebohrungen eingeschraubt werden können. Auch diese Auswechselarbeiten von Abstreifleisten sind daher immer noch relativ umständlich und zeitaufwendig.

Das Dokument EP-A-0 502 328 z.B. offenbart eine Abstreifereinrichtung gemäß dem Oberbegriff des Anspruchs 1.

Der Erfindung liegt daher die Aufgabe zugrunde, eine Abstreifereinrichtung gemäß dem Oberbegriff des Anspruches 1 gegenüber den oben beschriebenen bekannten Ausführungen so zu verbessern, daß die die Abstreifleiste tragende Trägerleiste durch verhältnismäßig einfache konstruktive Maßnahmen sowie bei hinreichend genauer und zuverlässiger Anbringung am Maschinenteil rasch ausgewechselt werden kann.

Diese Aufgabe wird erfindungsgemäß durch das Kennzeichen des Anspruches 1 gelöst.

Vorteilhafte Ausgestaltungen und Weiterbildungen der Erfindung sind Gegenstand der Unteransprüche.

Bei dieser erfindungsgemäßen Abstreifereinrichtung ist an dem ersten Maschinenteil wenigstens ein etwa leistenförmiges, parallel zur Trägerleiste und zur Abstreifleiste verlaufendes Zwischenträgerorgan fest anbringbar, an dem die Trägerleiste durch wenigstens ein Verbindungselement auswechselbar befestigt ist, das an einem stirnseitig vom ersten Maschinenelement vorstehenden Abschnitt des Zwischenträgerorgans angreift. Durch diese Ausbildung, Anordnung und Befestigung der Einheit aus Trägerleiste und Abstreifleiste am Zwischenträgerorgan wird bei einfacher Konstruktion zum einen eine gute und direkte Zugängigkeit zu den stirnseitig vorn und freiliegend angebrachten Verbindungselementen sowie zum Erfassen und stirnseitigen Auswechseln der Einheit aus Trägerleiste und Abstreifleiste gewährleistet, was ein sehr rasches Austauschen von abgenutzten Abstreifleisten - bei Vermeidung eines Auseinanderbauens von Maschinenteilen - mit sich bringt. Die zuverlässige Befestigung der Einheit aus Trägerleiste und Abstreifleiste am fest angebrachten Zwischenträgerorgan kann durch einander angepaßte Querschnittsprofilierungen von Trägerleiste und Zwischenträgerorgan sichergestellt werden.

Erfindungsgemäß wird das bzw. jedes Verbindungselement durch eine im Querschnitt etwa C-förmige Klammer gebildet, die einerseits einen stirnseitig vom ersten Maschinenteil vorstehenden Abschnitt des Zwischenträgerorgans und andererseits einen vorderen stirnseitigen Teil der Trägerleiste derart umgreift, daß die aneinanderliegenden Profilseiten von Zwischenträgerorgan und Trägerleiste flächig gegeneinander gepreßt sind. Durch diese äußerst einfache konstruktive Maßnahme wird die Einheit aus Trägerleiste und Abstreifleiste besonders einfach und rasch lösbar bzw. auswechselbar, dabei aber absolut sicher am Zwischenträgerorgan festgelegt, das seinerseits fest, d.h. nicht auswechselbar, vom ersten Maschinenteil getragen wird. Diese lösbare Befestigung der Trägerleiste am Zwischenträgerogan mit Hilfe wenigstens einer Klammer bringt ferner den großen Vorteil mit sich, daß umständliche Ausrichtarbeiten, die etwa bei der Befestigung mittels Schrauben erforderlich sind, entfallen können, wobei jedoch trotzdem eine zuverlässig genaue Anbringung der Einheit aus Trägerleiste und Abstreifleiste am Zwischenträgerorgan gewährleistet ist.

Eine vorteilhafte Verwendung der erfindungsgemässen Abstreifereinrichtung ist gekennzeichnet durch ihre Anpassung an eine als Schutzabdeckung von Führungsbahnen an Werkzeugmaschinen ausgeführte Teleskopabdeckung mit wenigstens zwei die Maschinenteile bildenden Abdeckkästen, von denen zumindest der eine Abdeckkasten teleskopartig zum andern verschiebbar ist und zumindest der erste Abdeckkasten im Bereich seines stirnseitigen vorderen Randes wenigstens eine Einheit aus einer mit der Außenseite des zweiten Abdeckkastens in Abstreifeingriff stehenden Abstreifleiste und einer Trägerleiste mittels wenigstens einer Klammer auswechselbar an einem zugehörigen Zwischenträgerorgan haltert, das in diesem vorderen Randbereich am ersten Abdeckkasten befestigt ist. Auf diese Weise ist die erfindungsgemäß ausgeführte Abstreifereinrichtung ganz besonders gut für eine Anbringung an Abdeckkästen solcher Teleskopabdeckungen geeignet. Bei einem notwendigen Auswechseln einer Abstreifleiste kann die Teleskopabdeckung insgesamt im zusammengebauten Betriebszustand verbleiben, wobei eine Einheit aus Trägerleiste und Abstreifleiste nach Entfernen der Klammer(n) rasch und problemlos stirnseitig herausgezogen und eine neue Einheit stirnseitig eingeschoben und wieder verklammert wird.

Bei dieser erfindungsgemäßen Abstreifereinrichtung sind wenigstens die Abdeckkästen sowie jedes Zwischenträgerorgan aus Stahl hergestellt, und hierbei ist jedes Zwischenträgerorgan vorzugsweise durch Punktschweißungen am zugehörigen Abdeckkasten befestigt, was eine rasche Montage der Zwischenträgerorgane an den Abdeckkästen mit sich bringt.

Die Befestigungsklammern können aus jedem geeigneten Material hergestellt werden. Besonders vorteilhaft ist es jedoch, wenn jede Klammer aus Federstahl hergestellt ist, wodurch sie besonders robust und stabil geführt sein und die notwendigen Befestigungskräfte aufbringen kann.

Weitere Einzelheiten der Erfindung ergeben sich aus der nachfolgenden Beschreibung anhand der Zeichnung.

In dieser Zeichnung zeigen
- Fig.1: eine perspektivische Teilansicht einer Teleskopabdeckung für Werkzeugmaschinen mit an einigen Abdeckkästen angebrachten Abstreifereinrichtungen gemäß der Erfindung;
- Fig.2: eine im vergrößerten Maßstab dargestellte Detail-Querschnittsansicht insbesondere durch die erfindungsgemäße Abstreifereinrichtung, entsprechend Schnittlinie II-II in Fig.1.

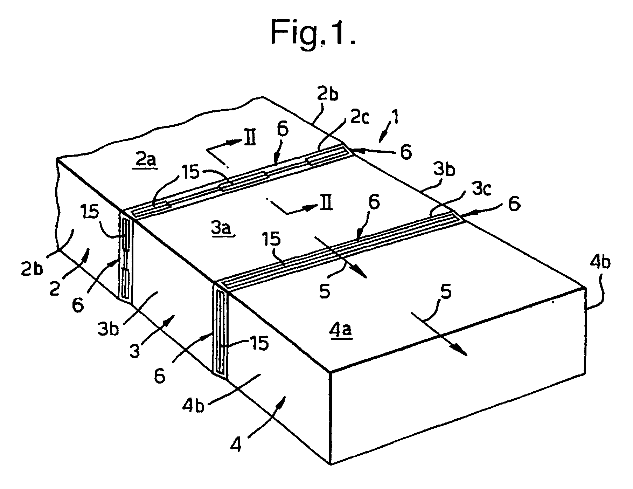

Die in Fig.1 nur in einer perspektivischen Teilansicht veranschaulichte Teleskopabdeckung 1 stellt ein besonders bevorzugtes Ausführungsbeispiel darfür dar, wie und wo eine erfindungsgemäße Abstreifereinrichtung oder mehrere solcher Abstreifereinrichtungen besonders vorteilhaft angebracht werden kann bzw. können. Eine solche Teleskopabdeckung 1 wird bei Werkzeugmaschinen verwendet, um dadurch vor allem Führungsbahnen vor Verschmutzungen (z.B. Metallspäne, Staub, Schmierflüssigkeiten und dergleichen) zu schützen bzw. freizuhalten. Die Teleskopabdeckung besteht dabei im wesentlichen aus einer entsprechenden Anzahl von teleskopartig ineinanderschiebbaren und auseinanderziehbaren Abdeckkästen 2, 3, 4. Hiervon kann der an einem Ende der Teleskopabdeckung 1 befestigte eine Abdeckkasten fest an einem Teil der Werkzeugmaschine (beispielsweise an einem beweglichen Teil) und ein am entgegengesetzten Ende der Teleskopabdeckung 1 befindlicher anderer Abdeckkasten mit einem entsprechenden anderen Teil der Werkzeugmaschine (beispielsweise einem ortsfesten Teil) fest verbunden sein, wodurch die einzelnen Abdeckkästen 2, 3, 4 entsprechend dem jeweiligen Arbeitsvorgang an der Werkzeugmaschine relativ zueinander teleskopartig bewegt werden. In Fig.1 ist das teleskopartige Auseinanderziehen der Abdeckkästen 2, 3, 4 durch Pfeile 5 angedeutet; das teleskopartige Ineinanderschieben geschieht dementsprechend entgegengesetzt zu der Richtung der Pfeile 5.

Bei diesem Ausführungsbeispiel gemäß der Zeichnung sei somit angenommen, daß die Maschinenteile, an die die erfindungsgemäße Abstreifereinrichtung angebaut ist, durch die einzelnen Abdeckkästen 2, 3, 4 der Teleskopabdeckung 1 gebildet werden. Aus Fig.1 läßt sich auch entnehmen, daß jede Abdeckkasten 2, 3, 4 - bei dieser Ausführungsform - eine Deckwand 2a, 3a bzw. 4a und zwei winklig dazu angeordnete Seitenwände 2b, 3b bzw. 4b aufweist. Um eine - in der Zeichnung nicht näher veranschaulichte, da bekannte Führungsbahn einer Werkzeugmaschine zuverlässig abdecken und schützen zu können, sind bei dieser Ausführungsform der Teleskopabdeckung 1 - bei Betrachtung in Richtung der Abzugsrichtung gemäß den Pfeilen 5 - an den stirnseitigen vorderen Randbereichen bzw. Rändern der Abdeckkästen 2 und 3, und zwar sowohl der Deckwände 2a, 3a als auch der Seitenwände 2b, 3b Abstreifereinrichtungen 6 gemäß der vorliegenden Erfindung angebracht.

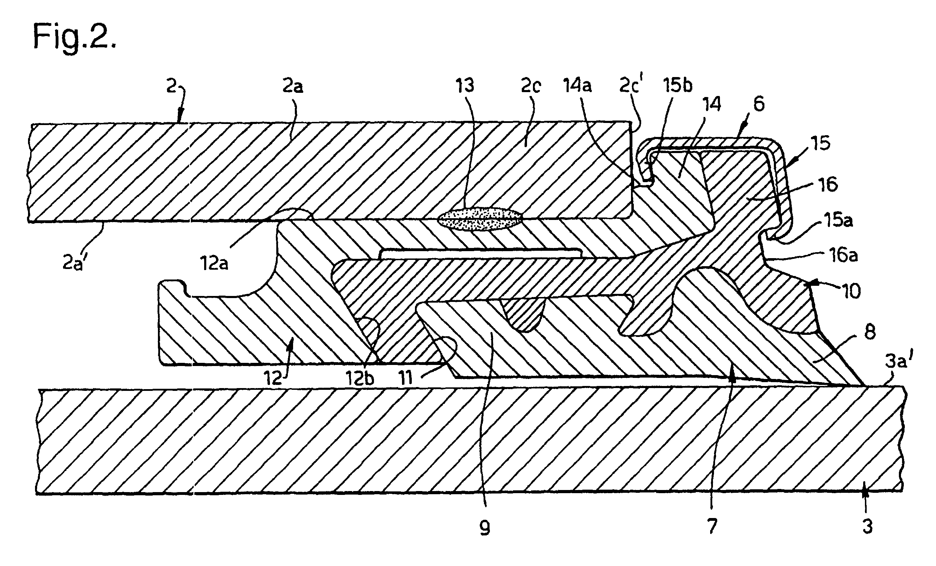

Die erfindungsgemäße Ausbildung der bzw. jeder Abstreifereinrichtung 6 sei nachfolgend anhand der Fig.2 näher erläutert, d.h. bei der hier veranschaulichten Abstreifereinrichtung 6 handelt es sich um diejenige, die am vorderen Randbereich 2c der Deckwand 2a des Abdeckkastens 2, in den der nächst kleinere Abdeckkasten 3 teleskopartig hineinverschiebbar und aus dem dieser Abdeckkasten 3 wieder herausziehbar ist (wie an sich bekannt).

Jede Abstreifereinrichtung 6 enthält grundsätzlich wenigstens eine aus elastisch verformbarem Material (z.B. einem entsprechenden Kunststoff oder Gummi) hergestellte, profilierte Abstreifleiste 7, an deren vorderen Bereich des Profilquerschnittes eine Abstreiflippe 8 und an deren hinteren Bereich des Profilquerschnittes ein Halterungsansatz 9 ausgebildet bzw. angeformt ist, der im vorliegenden Beispiel im wesentlichen einen Schwalbenschwanzquerschnitt besitzt. Ferner enthält diese Abstreifereinrichtung 6 wenigstens eine aus starrem Material (z.B. Stahl, Aluminium, hinreichend steifem Kunststoff oder dergleichen) hergestellte, ebenfalls profilierte Trägerleiste 10, die eine im hinteren Profilquerschnitt ausgebildete Profil- bzw. Halterungsausnehmung 11 zur auswechselbaren Aufnahme und Halterung der Abstreifleiste 7 aufweist.

Weiterhin enthält jede Abstreifereinrichtung 6 wenigstens ein etwa leistenförmiges Zwischenträgerorgan 12, das am zugehörigen Maschinenteil, in diesem Falle also am vorderen Randbereich 2c fest, d.h. nicht auswechselbar angebracht ist. Im vorliegenden Falle liegt die eben ausgebildete obere Außenseite 12a flächig an der Unterseite 2a' der Deckwand 2a an. Dieses Zwischenträgerorgan ist ebenfalls aus starrem Material hergestellt, und zwar vorzugsweise aus Stahl, so daß bei ebenfalls aus Stahl hergestellten Abdeckkästen 2, 3, 4 dieses bzw. jedes Zwischenträgerorgan 12 durch Punktschweißungen - wie bei 13 angedeutet - am zugehörigen Abdeckkasten, z.B. Abdeckkasten 2, befestigt sein kann.

Die Abstreifleiste 7, die Trägerleiste 10 und das Zwischenträgerorgan 12 verlaufen im wesentlichen parallel zueinander sowie parallel zur zugehörigen vorderen Stirnkante 2c' der Deckwand 2a. Hierbei liegt die im Querschnitt nach vorn spitz zulaufende Abstreiflippe 8 dichtend auf der Außenfläche 3a' der Deckwand 3a des darunter liegenden abdeckkastens 3 an.

Wie bereits weiter oben erwähnt worden ist, bilden die Trägerleiste 10 und die von ihr gehalterte Abstreifleiste 7 gewissermaßen eine auswechselbare Einheit, die lösbar, also auswechselbar am Zwischenträgerorgan 12 befestigt ist. Zu diesem Zweck ist wenigstens ein entsprechendes Verbindungselement, vorzugsweise sind jedoch mehrere gleichartige Verbindungselemente 15 vorgesehen, das bzw. die an einem stirnseitig vom zugehörigen Abdeckkasten 2 vorstehenden Abschnitt 14 des Zwischenträgerorgans 12 angreift, und zwar derart, daß es damit die Trägerleiste 10 am Zwischenträgerorgan 12 festlegt.

Wie in Fig.2 gut zu erkennen ist, besitzt das Zwischenträgerorgan 12 an seiner der Trägerleiste weiterhin zugewandten Seite eine solche Querschnittsprofilierung, daß zumindest der hintere Bereich der Außenprofilierung der Trägerleiste 10 mit wenigstens einer Hinterschneidung 12b formschlüssig aufgenommen und die Trägerleiste 10 bei gelöstem Verbindungselement 15 mitsamt der Abstreifleiste 7 stirnseitig nach vorn vom Zwischenträgerorgan 12 herausgezogen (und entgegengesetzt wieder hineingeschoben), also auf einfache Weise ausgewechselt werden kann. Wenn hierbei die hinteren Bereiche der Querschnittsprofilierungen von Zwischenträgerorgan 12 und Trägerleiste 10 etwa nach Art von korrespondierenden halben Schwalbenschwanzprofilierungen - wie in Fig.2 veranschaulicht - ausgeführt sind, dann werden dadurch in besonders vorteilhafter Weise ineinandergreifende Hinterschneidungen gebildet, durch die die Trägerleiste 10 gegen das Zwischenträgerorgan 12 fest verspannt wird, wenn die Verbindungselemente 15 angebracht sind.

Bei dieser erfindungsgemäßen Ausführung der Abstreifereinrichtungen 6 hat es sich als besonders zweckmäßig erwiesen, das bzw. jedes Verbindungselement 15 durch eine im Querschnitt etwa C-förmige Klammer 15 zu bilden, die einerseits den vom zugehörigen Abdeckkasten 2 bzw. 3 stirnseitig vorstehenden Abschnitt 14 des Zwischenträgerorgans 12 und andererseits einen vorderen strinseitigen Teil 16 der Trägerleiste 10 derart umgreift, daß - wie in Fig.2 zu erkennen - die aneinanderliegenden Profilseiten von Zwischenträgerorgan 12 und Trägerleiste 10 flächig gegeneinander gepreßt sind. Auf diese Weise wird eine recht einfach lösbare und herstellbare, jedoch äußerst stabile Befestigung der Einheit aus Trägerleiste 10 und Abstreifleiste 7 gewährleistet.

Grundsätzlich kann jede Einheit aus Abstreifleiste 7 und Trägerleiste 10 durch mehrere über die Leistenlänge mit Abstand voneinander angebrachte Klammern 15 oder aber auch mit Hilfe einer durchgehenden einzigen Klammer 15 festgeklemmt werden. Dieser Sachverhalt ist in Fig.1 angedeutet, wonach die bzw. jede Abstreifereinrichtung 6 am hinteren Abdeckkasten 2 mit mehreren Klammern 15 ausgestattet ist, während jede am vorderen Randbereich 3c des Mittleren Abdeckkastens 3 angebrachte Abstreifereinrichtung 6 jeweils eine durchgehende Verbindungsklammer 15 enthält.

Es sei an dieser Stelle auch bemerkt, daß zweckmäßig jede Klammer 15 aus Federstahl geeigneter Materialdicke hergestellt ist.

Die bzw. jede Klammer 15 ist - wie in der Zeichnung zu erkennen - ebenfalls etwa leistenförmig ausgebildet, wobei sie parallel zu Trägerleiste 10 und Zwischenträgerorgan 12 verläuft und - im Querschnitt betrachtet (Fig.2) - einwärts gebogene bzw. abgewinklete Längsränder 15a und 15b aufweist, die in passende Aussparungen 14a bzw. 16a einerseits an der Oberseite des zum Zwischenträgerorgan 12 gehörenden Abschnittes 14 und andererseits an der vorderen Stirnseite, d.h. am strinseitigen Teil 16, der Trägerleiste 10 eingreifen. Es wird somit eine zuverlässige Klemmverbindung bzw. Verspannung zwischen Abschnitt 14 und Teil 16 und somit ihrer Hauptelemente, nämlich der Trägerleiste 10 am Zwischenträgerorgan 12 geschaffen.

Durch die erfindungsgemäße Ausbildung jeder Abstreifereinrichtung 6 sowie durch deren Anpassung an die Abdeckkästen 2, 3 wird - beim veranschaulichten Ausführungsbeispiel - sowohl im stirnseitigen vorderen Randbereich 2c des Abdeckkastens 10 als auch im stirnseitigen vorderen Randbereich 3c des Abdeckkastens 3 eine Gruppe von Einheiten aus je einer mit der Außenseite, z.B. 3a', des jeweils zweiten Abdeckkastens 3 bzw. 4 in Abstreifeingriff stehenden Abstreifleiste 7 und einer Trägerleiste 10 mittels zugehöriger Klammern 15 auswechselbar am zugehörigen Zwischenträgerorgan 12 gehaltert, das jeweils an dem entsprechenden vorderen Randbereich 2c bzw. 3c dauerhaft befestigt, vorzugsweise durch Punktschweißungen 13 fest angebracht ist.

Obwohl die zuvor anhand der Fig.1 und 2 beschriebenen Anbaumöglichkeit der erfindungsgemäßen Abstreifereinrichtung 6 aufgrund der äußerst vorteilhaften Anbringungs- und Verwendungsmöglichkeiten an Teleskopabdeckungen bzw. Abdeckkästen besonders bevorzugt ist, könnte eine solche Abstreifereinrichtung auch bei anderen Maschinenteilen angebaut werden, wo ähnliche Abstreif- bzw. Abdichtungsverhältnisse zwischen relativ zueinander bewegbaren Maschinenteilen sinnvoll sind. Als ein Beispiel sei dazu die Anbringung einer Abstreifereinrichtung an einem entlang einer Führungsbahn beweglichen Teil, beispielsweise einem Support, einer Werkzeugmaschine genannt.

## Patentansprüche

1. Abstreifereinrichtung zum Anbau an wenigstens einen von zumindest zwei Maschinenteilen (2, 3, 4), von denen der eine relativ zum anderen bewegbar ist, insbesondere bei Werkzeugmaschinen zum Schutz von Führungsbahnen und zum Anbau an Teleskopabdeckungen solcher Führungsbahnen, enthaltend
a) wenigstens eine aus elastisch verformbarem Material hergestellte, profilierte Abstreifleiste (7) mit einer im vorderen Bereich des Profilquerschnittes ausgebildeten Abstreiflippe (8) und einem hinteren Halterungsansatz (9),
b) wenigstens eine aus starrem Material hergestellte, profilierte Trägerleiste (10), die eine im hinteren Profilquerschnitt ausgebildete Ausnehmung (11) zur auswechselbaren Halterung der Abstreifleiste (7) aufweist und die ihrerseits lösbar mit dem ersten Maschinenteil (2, 3) verbunden ist,
c) wenigstens ein etwa leistenförmiges, parallel zur Trägerleiste (10) und zur Abstreifleiste (7) verlaufendes Zwischenträgerorgan (12), das an dem ersten Maschinenteil (2, 3) fest anbringbar ist, **gekennzeichnet durch** wenigstens eine im Querschnitt etwa C-förmige Klammer (15) wodurch an dem wenigstens ein Zwischenträgerorgan (12) die Trägerleiste auswechselbar befestigt ist, die einerseits einen stirnseitig vom ersten Maschinenteil (2, 3) vorstehenden Abschnitt (14) des Zwischenträgerorgans (12) und andererseits einen vorderen stirnseitigen Teil (16) der Trägerleiste (10) derart umgreift, daß die aneinanderliegenden Profilseiten von Zwischenträgerorgan und Trägerleiste flächig gegeneinandergepreßt sind.

2. Abstreifereinrichtung nach Anspruch 1, **gekennzeichnet durch** eine derartige Querschnittsprofilierung des Zwischenträgerorgans (12) auf seiner der Trägerleiste (10) zugewandten Seite, daß zumindest der hintere Bereich der Außenprofilierung der Trägerleiste (10) mit wenigstens einer Hinterschneidung (12b) formschlüssig aufgenommen und die Trägerleiste bei gelöstem Verbindungselement (15) mit samt der Abstreifleiste (7) stirnseitig nach vorn vom Zwischenträgerorgan (12) auswechselbar ist.

3. Abstreifereinrichtung nach Anspruch 1, **dadurch gekennzeichnet, daß** die hinteren Bereiche der Querschnittsprofilierungen von Zwischenträgerorgan (12) und Trägerleiste (10) nach Art von korrespondierenden halben Schwalbenschwanzprofilierungen ausgeführt sind, die ineinandergreifende Hinterschneidungen bilden und durch die die Trägerleiste gegen das Zwischenträgerorgan verspannt wird.

4. Abstreifereinrichtung nach Anspruch 1, **dadurch gekennzeichnet, daß** jede Klammer (15) etwa leistenförmig ausgebildet ist, parallel zu Trägerleiste (10) und Zwischenträgerorgan (12) verläuft und - im Querschnitt betrachtet - einwärtsgebogene Längsränder (15a, 15b) aufweist, die in passende Aussparungen (14a, 16a) einerseits an der Oberseite des Zwischenträgerorgans (12) und andererseits an der vorderen Stirnseite (16) der Trägerleiste (10) eingreifen.

5. Abstreifereinrichtung nach Anspruch 1, **dadurch gekennzeichnet, daß** wenigstens die Maschinenteile (2, 3, 4) und jedes Zwischenträgerorgan (12) aus Stahl hergestellt und jedes Zwischenträgerorgan durch Punktschweißungen (13) am zugehörigen Maschinenteil befestigt ist.

6. Abstreifereinrichtung nach Anspruch 1, **dadurch gekennzeichnet, daß** jede Einheit aus Abstreifleiste (7) und Trägerleiste (10) durch eine im wesentlichen durchgehende Klammer (15) am zugehörigen Zwischenträgerorgan (12) festgeklemmt ist.

7. Abstreifereinrichtung nach Anspruch 1, **dadurch gekennzeichnet, daß** jede Einheit aus Abstreifleiste (7) und Trägerleiste (10) durch mehrere über die Leistenlänge mit Abstand voneinander angebrachte Klammern (15) festgeklemmt ist.

8. Abstreifereinrichtung nach Anspruch 1, **dadurch gekennzeichnet, daß** jede Klammer (15) aus Federstahl hergestellt ist.

9. Verwendung einer Abstreifereinrichtung nach Anspruch 1, **gekennzeichnet durch** ihre Anpassung an eine als Schutzabdeckung von Führungsbahnen an Werkzeugmaschinen ausgeführte Teleskopabdeckung (1) mit wenigstens zwei die Maschinenteile bildenden Abdeckkästen (2, 3, 4), von denen zumindest der eine Abdeckkasten teleskopartig zum anderen verschiebbar ist und zumindest ein Abdeckkasten (2, 3) im Bereich seines stirnseitigen vorderen Randes (2c, 3c) wenigstens eine Einheit aus einer mit der Außenseite (3a') des zweiten Abdeckkastens (3, 4) in Abstreifeingriff stehenden Abstreifleiste (7) und Trägerleiste (10) mittels wenigstens einer Klammer (15) auswechselbar an einem zugehörigen Zwischenträgerorgan (12) haltert, das in diesem vorderen Randbereich (2c, 3c) am entsprechenden Abdeckkasten befestigt ist.

10. Verwendung einer Abstreifereinrichtung nach Anspruch 9, wobei jeder Abdeckkasten eine Deckwand und zwei winklig dazu angeordnete Seitenwände aufweist, **dadurch gekennzeichnet, daß** am stirnseitigen vorderen Randbereich (2c, 3c) der Deckwand (2a, 3a) und der Seitenwände (2b, 3b) zumindest des einen Abdeckkastens (2, 3) je eine Einheit aus Abstreifleiste (7) und Trägerleiste (10) mittels Klammern (15) an einem zugehörigen Zwischenträgerorgan (12) auswechselbar gehaltert ist.

## Claims

1. Wiper device for attaching to at least one of at least two machine parts (2, 3, 4), of which the one is movable relative to the other, in particular in machine tools for protecting guideways and for attaching to telescopic covers of such guideways, containing
a) at least one profiled wiping strip (7) made of elastically deformable material and having a wiping lip (8), formed in the front region of the profile cross section, and a rear mounting extension (9),
b) at least one profiled support strip (10) which is made of rigid material, has a recess (11) formed in the rear profile cross section and intended for the interchangeable mounting of the wiping strip (7), and is in turn releasably connected to the first machine part (2, 3),
c) at least one roughly strip-shaped intermediate support member (12) which runs parallel to the support strip (10) and to the wiping strip (7) and can be firmly attached to the first machine part (2, 3), **characterized by** at least one clip (15) roughly C-shaped in cross section, as a result of which the support strip is interchangeably fastened to the at least one intermediate support member (12), this clip (15) enclosing, on the one hand, a section (14), projecting at the end face from the first machine part (2, 3), of the intermediate support member (12) and, on the other hand, a front end-face part (16) of the support strip (10) in such a way that those profile sides of intermediate support member and support strip which bear against one another are pressed against one another in a planar manner.

2. Wiper device according to Claim 1, **characterized by** such a cross-sectional profiled portion of the intermediate support member (12) on its side facing the support strip (10) that at least the rear region of the outer profiled portion of the support strip (10) is accommodated in a positive-locking manner with at least one undercut (12b), and, when connecting element (15) is released, the support strip together with the wiping strip (7) can be replaced forwards from the intermediate support member (10) at the end face.

3. Wiper device according to Claim 1, **characterized in that** the rear regions of the cross-sectional profiled portions of intermediate support member (12) and support strip (10) are designed like corresponding half dovetail profiled portions which form interlocking undercuts and by means of which the support strip is restrained against the intermediate support member.

4. Wiper device according to Claim 1, **characterized in that** each clip (15) is of roughly strip-shaped design, runs parallel to the support strip (10) and intermediate support member (12) and - as viewed in cross section - has inwardly curved longitudinal margins (15a, 15b) which engage in matching recessed portions (14a, 16a), on the one hand on the top side of the intermediate support member (12) and on the other hand on the front end face (16) of the support strip (10).

5. Wiper device according to Claim 1, **characterized in that** at least the machine parts (2, 3, 4) and each intermediate support member (12) are made of steel, and each intermediate support member is fastened to the associated machine part by spot welds (13).

6. Wiper device according to Claim 1, **characterized in that** each unit of wiping strip (7) and support strip (10) is clamped in place on the associated intermediate support member (12) by an essentially continuous clip (15).

7. Wiper device according to Claim 1, **characterized in that** each unit of wiping strip (7) and support strip (10) is clamped in place by a plurality of clips (15) attached at a distance from one another over the strip length.

8. Wiper device according to Claim 1, **characterized in that** each clip (15) is made of spring steel.

9. Use of a wiper device according to Claim 1, **characterized by** its adaptation to a telescopic cover (1) designed as a protective cover for guideways on machine tools and having at least two covering boxes (2, 3, 4) which form the machine parts and of which at least the one covering box is displaceable telescopically relative to the other and at least one covering box (2, 3), in the region of its end-face front margin (2c, 3c), mounts at least one unit of a wiping strip (7), in wiping engagement with the outside (3a') of the second covering box (3, 4), and a support strip (10) in an interchangeable manner on an associated intermediate support member (12) by means of at least one clip (15), this intermediate support member (12) being fastened to the corresponding covering box in this front marginal region (2c, 3c).

10. Use of a wiper device according to Claim 9, each covering box having a top wall and two side walls arranged at an angle thereto, **characterized in that**, at the end-face front marginal region (2c, 3c) of the top wall (2a, 3a) and of the side walls (2b, 3b) of at least the one covering box (2, 3), one unit each of wiping strip (7) and support strip (10) is mounted in an interchangeable manner on an associated intermediate support member (12) by means of clips (15).

## Revendications

1. Dispositif racleur pour le montage sur au moins l'une de deux parties de machine (2, 3, 4) dont l'une est déplaçable relativement à l'autre, notamment dans des machines-outils pour la protection de glissières de guidage et pour le montage sur des recouvrements télescopiques de telles glissières de guidage, comportant :
a) au moins une baguette de raclage profilée (7), réalisée en un matériau élastiquement déformable, avec une lèvre de raclage (8) réalisée dans la zone avant de la section transversale de profil et un bout rapporté de retenue arrière (9),
b) au moins une baguette de support profilé (10) réalisée en un matériau rigide qui présente un évidement (11) réalisé dans la section transversale de profil arrière pour la retenue échangeable de la baguette de raclage (7) et qui est reliée à son tour amoviblement à la première partie de machine (2, 3),
c) au moins un organe de support intermédiaire (12) approximativement en forme de baguette, s'étendant parallèlement à la baguette de support (10) et à la baguette de raclage (7) qui peut être fixé solidement à la première partie de machine (2, 3), **caractérisé par** au moins une pince (15) en section transversale à peu près en forme de C, par quoi la baguette de support est fixée d'une manière échangeable à au moins un organe de support intermédiaire (12) précité, qui entoure, d'une part, un tronçon (14) de l'organe de support intermédiaire (12) faisant saillie au côté frontal de la première partie de machine (2, 3) et, d'autre part, une partie frontale avant (16) de la baguette de support (10) de telle sorte que les côtés de profilés s'appliquant l'un contre l'autre de l'organe de support intermédiaire et de la baguette de support sont appliqués par pression avec leurs faces l'un contre l'autre.

2. Dispositif racleur selon la revendication 1, **caractérisé par** un tel profilage en section transversale de l'organe de support intermédiaire (12) sur son côté orienté vers la baguette de support (10) qu'au moins la zone arrière du profilage extérieur de la baguette de support (10) soit reçue par concordance des formes avec au moins une contre-dépouille, et la baguette de support, lorsque l'élément de liaison (15) est relâché, peut être échangée conjointement avec la baguette de raclage (7) au côté frontal vers l'avant de l'organe de support intermédiaire (12).

3. Dispositif racleur selon la revendication 1, **caractérisé en ce que** les zones arrière des profilages en section transversale de l'organe de support intermédiaire (12) et de la baguette de support (10) sont réalisées à la manière de profilages correspondants en demi-queue d'aronde qui forment des contre-dépouilles s'engageant l'une dans l'autre et par lesquelles la baguette de support est contrainte contre l'organe de support intermédiaire.

4. Dispositif racleur selon la revendication 1, **caractérisé en ce que** chaque pince (15) est réalisée approximativement en forme de baguette, s'étend parallèlement à la baguette de support (10) et à l'organe de support intermédiaire (12) et - en regardant en section transversale - présente des bords longitudinaux (15a, 15b) courbés vers l'intérieur qui s'engagent dans des évidements adaptés (14a, 16a) d'une part, au côté supérieur de l'organe de support intermédiaire (12) et, d'autre part, au côté frontal avant (16) de la baguette de support (10).

5. Dispositif racleur selon la revendication 1, **caractérisé en ce qu'**au moins les parties de machine (2, 3, 4) et chaque organe de support intermédiaire (12) est fabriqué en acier, et **en ce que** chaque organe de support intermédiaire est fixé par des soudages par points (13) à la partie de machine associée.

6. Dispositif racleur selon la revendication 1, **caractérisé en ce que** chaque unité constituée de baguette de raclage (7) et de baguette de support (10) est serrée par une pince sensiblement continue (15) à l'organe de support intermédiaire associé (12).

7. Dispositif racleur selon la revendication 1, **caractérisé en ce que** chaque unité constituée de baguette de raclage (7) et de baguette de support (10) est serrée par plusieurs pinces appliquées sur la longueur de la baguette à une distance les unes des autres.

8. Dispositif racleur selon la revendication 1, **caractérisé en ce que** chaque pince (15) est fabriquée en acier à ressort.

9. Utilisation d'un dispositif racleur selon la revendication 1, **caractérisée par** son adaptation à un recouvrement télescopique (1) réalisé comme recouvrement de protection de glissières de guidage à des machines-outils, avec au moins deux caissons de recouvrement (2, 3, 4) formant les parties de machine, dont au moins un caisson de recouvrement est déplaçable d'une manière télescopique relativement à l'autre, et au moins un caisson de recouvrement (2, 3) retient au voisinage de son bord frontal avant (2c, 3c) au moins une unité constituée d'une baguette de raclage (7) en prise de raclage avec le côté extérieur (3a') du deuxième caisson de recouvrement (3, 4) et d'une baguette de support (10) au moyen d'une pince (15) d'une manière échangeable à un organe de support intermédiaire associé (12) qui est fixé dans cette zone de bord avant (2c, 3c) au caisson de recouvrement correspondant.

10. Utilisation d'un dispositif racleur selon la revendication 9, où chaque caisson de recouvrement présente une paroi de recouvrement et deux parois latérales disposées angulairement relativement à celle-ci, **caractérisée en ce qu'**il est retenu d'une manière échangeable, à la zone de bord frontale avant (2c, 3c) de la paroi de recouvrement (2a, 3a) et des parois latérales (2b, 3b) d'au moins un caisson de recouvrement (2, 3) respectivement une unité constituée d'une baguette de raclage (7) et d'une baguette de support (10) au moyen de pinces (15) à un organe de support intermédiaire associé (12).
